# EUROPEAN PATENT SPECIFICATION

(11) **EP 1 099 342 B1**
(45) Date of publication and mention of the grant of the patent: **28.05.2003**
(21) Application number: 99937286.5
(22) Date of filing: 15.07.1999
(51) Int. Cl.: H04N 5/775, H04N 5/445

(54) **USE OF ON-SCREEN DISPLAY (OSD) FOR SUPPLYING CONTROL AND AUXILIARY INFORMATION TO EXTERNAL DEVICES**
OSD-BENÜTZUNG ZUR ÜBERMITTLUNG VON KONTROLL- UND ZUSATZDATEN ZU EXTERNEN VORRICHTUNGEN
UTILISATION DE L'AFFICHAGES A L'ECRAN (OSD) POUR TRANSMETTRE DES COMMANDES ET DES INFORMATIONS AUXILIAIRES A DES DISPOSITIFS EXTERNES

(30) Priority: 22.07.1998 US 93699 P
(43) Date of publication of application: 16.05.2001
(73) Proprietor: Thomson Licensing S.A., 92648 Boulogne Cedex (FR)
(72) Inventor: MENGEL, William, Henry, Carmel, IN 46032 (US)
(74) Representative: Rittner, Karsten, Dr.
(86) International application number: US9916187
(87) International publication number: WO00005881

(56) References cited:
- EP-A- 0 843 468
- EP-A- 0 849 958
- WO-A-98/28913

## Description

### BACKGROUND OF THE INVENTION

### 1. Field of the Invention

The present invention relates to digital video signal processing and, more particularly, to a scheme for providing control information in a digital data stream.

### 2. Description of the Related Art

In analog television systems, certain auxiliary information such as closed captioning, extended data service (XDS), vertical interval test signal (VITS), and the like, is included in an analog signal in the form of data inserted into the vertical blanking interval (VBI). In digital television or multi-media systems, the traditional analog vertical and horizontal blanking areas or intervals and the information contained in those areas may not be transmitted as part of the picture information.

In the digital domain, auxiliary information such as that found in the blanking portions of an analog signal is typically transmitted and processed independently of the received video information. For example, a digital television signal or direct broadcast satellite (DBS) signal such as that provided by DirecTV™, provides a stream of digital data arranged in "packets", thus the term packetized data. The packetized data is received and processed by a digital signal receiver. Some packets provide video information, other packets provide audio information, and still other packets provide control and/or auxiliary information such as closed caption data. Additional information contained in each packet identifies the type of data included in each packet. The receiver processes the packets and generates video, audio, and auxiliary information signals.

The analog output signal may be provided in any format such as NTSC, PAL or other standard, and is produced by converting the digital signal to an analog signal and processing the analog signal in an encoder (NTSC, PAL, etc.) circuit. In the United States, the digital signal is converted into an NTSC standard analog signal and will be referred to hereafter as such with the understanding that such reference encompasses other types of encoded analog signals. The digital signal can also be output as an RGB (red, green, blue) signal or component Y, Pr, Pb or Y, Cr, Cb signals.

As the NTSC analog output signal is generated by the NTSC encoder circuit, vertical and horizontal blanking regions are produced in the signal. If required, auxiliary information received as packetized data in the digital signal may be inserted in the appropriate portions of the analog signal. For example, closed caption (CC) information is inserted into line 21 of field 1, as implemented in the U.S. NTSC system. The resulting NTSC signal may then be coupled to a conventional analog television (video) signal receiver and the closed captioning information may be decoded using a conventional closed caption decoder included in the analog television signal receiver. However, depending on the capabilities of the broadcast network and the digital receiver/decoder, it may not be possible to include some or any of the auxiliary information in the blanking intervals generated by the digital receiver. In addition, a video receiver having an RGB component or similar output may not have blanking intervals and as a result cannot include auxiliary information in the conventional manner.

In addition to CC, XDS, and other auxiliary information delivered in the blanking intervals of an analog video (television) signals, the analog video signals may also include control information such as what is known as the Copy Guard Management System (CGMS). CGMS has been developed to permit receiving devices to control the recording and copying of programming. The CGMS scheme provides two bits that are included in a program signal to indicate one of four different record/copy modes that is permitted for the program. For example, one mode prohibits copying. Another mode permits one copy to be made. Another mode permits unlimited copying. In analog television signals, the required copy control information can be provided to the receiver in the vertical blanking interval. Other coding/data/information delivery schemes may also utilize blanking intervals. In receivers receiving digital signals or analog signals without blanking intervals or in systems lacking encoders capable of inserting the information in generated blanking intervals, providing required control information such as copy control information that can be detected and processed by other devices becomes problematic. Even if the signal includes blanking intervals, including additional control information such as copy control information may be difficult or impossible for systems that require adding a significant amount of control data to the already substantial amount of data that may already be included in blanking intervals.

Most current video or television reception devices, whether analog or digital, now include on-screen display (OSD) capability for generating messages that appear in the displayed video image and convey information, such as channel number, time, and the like to a user. The typical OSD generator can manipulate the color and/or palette of each pixel as well as control whether the pixel is on or off. A typical OSD also includes a microprocessor generating desired graphics or character display information, e.g. the microprocessor accesses a character generator ROM, and inserting the display information into the output signal at the appropriate time to produce the OSD display in the desired region of the display. To insert the OSD information at the correct time, the systems can use the video synchronization signals to track the current display location by determining the pixels per line (horizontal display position) and line intervals (vertical display position). When the line count and pixel count indicate that the display has reached a location where OSD information is to be inserted, the microprocessor controls a fast switch to couple the OSD information to the output signal.

What is needed in the art is a way for providing control and auxiliary information in systems producing signals lacking blanking intervals.

As well, what is needed in the art is a way for providing control and auxiliary information in systems unable to include such information in blanking intervals.

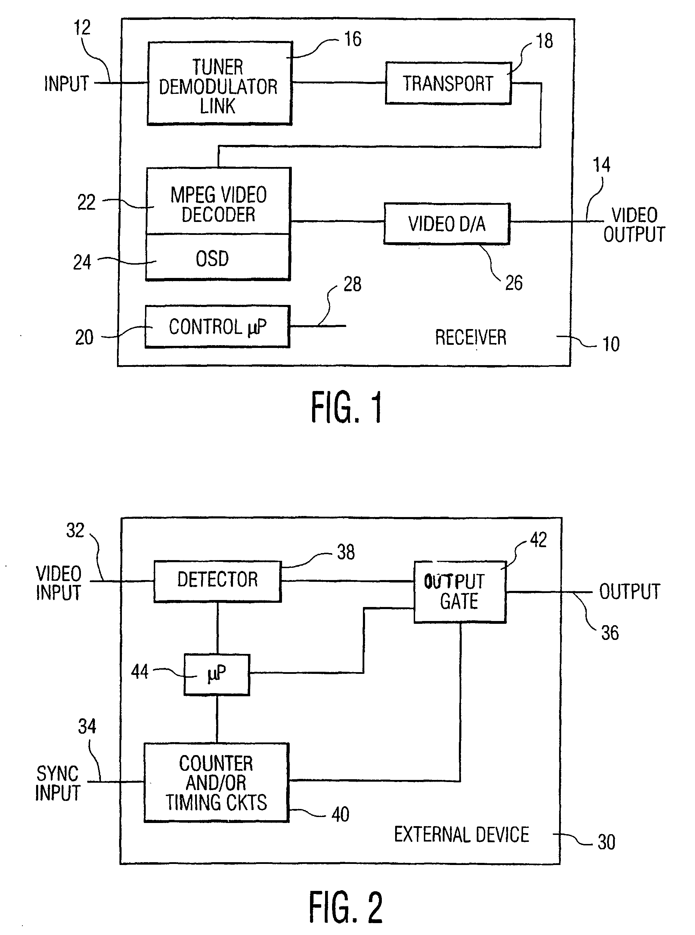

WO 98 28913 discloses an apparatus for forming a superpacket of digital data for an external device from received transport packets. This apparatus receives a signal including compressed digital video and control data. Copy control data is derived from the control data and is attached as a header to the digital data transport packet as shown in fig. 2B. The digital transport superpacket formed by the apparatus is then provided to an external device, i.e. a recording device (200). The recording device is thus able to readily detect copy control information for the received signal from the attached header. Further it mentions the generation of OSD data displayed on (99) being generated by either the video receiver or the recorder. A digital signal is received and a reformed digital signal is provided to the external device. The control information is attached in digital form as a header to the digital transport packet.

EP-A-0 849 958 discloses for MPEG packet transmission including non-video data in the form of Program Map Tables and an OSD thereof, but is silent to the specific OSD data processing.

### SUMMARY OF THE INVENTION

The invention is as set out in claim 1.

The problem described above of providing control and/or auxiliary information in systems producing signals lacking blanking intervals or in systems unable to include control and/or auxiliary information in blanking intervals, is overcome with the present invention by using a resident OSD feature to insert control or other information such as signatures or watermarks during non-blanking portions of the signal, e.g. active display intervals.

An OSD system can be controlled e.g. via software, to insert information at any location in the display region through the video signal. Thus, the OSD system can be utilized to mirror or deliver the control and/or auxiliary information usually included in the blanking interval of an analog television signal into the non-blanking portions of the signal. As an example, for signals outputted as an RGB signal, the OSD by manipulating the pixels would insert a visual depiction of the data representing the desired control or auxiliary information during portions of the output signal corresponding to the desired non-blanking portion of the signal. Then, a device external to the device providing the OSD capability, e.g. a video display device coupled to the output of a digital receiver, a VCR, or other recording/playback device coupled to the output of a digital receiver, will receive the data representing the desired information in the non-blanking region and process the data to obtain the required control and/or auxiliary information. The obtained information may be acted upon or otherwise by the external device.

For certain systems, the OSD could repeat auxiliary or control information in the non-blanking regions to provide for decoding by systems in which decoding of information within the blanking area is not practical or desired. In other systems, the OSD could generate or duplicate the information typically found in blanking areas into non-blanked areas in a similar format. In addition, the chroma and luminance capabilities of the OSD can be utilized to further expand the data handling capabilities since the OSD is capable of determining the characteristics of individual pixels.

The information inserted by the OSD in the non-blanking regions may be inserted in a manner that will not produce an objectionable display. For example, the OSD can insert the information during an active display region that is in an overscan region. If the amount of information is extremely limited or static, e.g. two bits of copy control information (CGMS), such auxiliary or control information could be inserted in the visible display region without causing objectionable display artifacts.

In accordance with an aspect of the present invention, a video receiver's built-in OSD can be utilized to generate or emulate control and/or auxiliary information of any other data or information traditionally delivered along with the video information in the blanking areas in a similar format in the non-blanked portions of the video signal for decoding by external devices when decoding of information within the blanking areas is not possible, practical or desired. Such can be implemented in software to control the OSD.

The information can be duplicated in the non-blanking portions of the video for decoding by external devices when decoding of information within the blanking areas is not practical or desired.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 is a block diagram of a digital video receiver in accordance with the principles of the present invention; and
Fig. 2 is a block diagram of an external device or module couplable to the output of the digital video receiver of Fig. 1 in accordance with the principles of the present invention.

Corresponding reference characters indicate corresponding parts throughout the several views. The exemplification set out herein illustrates a preferred embodiment of the invention, and such exemplification is not to be construed as limiting the scope of the invention in any manner.

### DETAILED DESCRIPTION OF THE INVENTION

Referring now to the drawings and, more particularly to Fig. 1, there is shown a simplified, functional block diagram of a video receiver generally designated 10 in accordance with the principles of the present invention. Receiver 10 can be any type of video signal receiver such as a DBS receiver, a converter/set-top box or the like that is adapted to receive via input 12 a radio frequency (RF) digital signal. The source(s) of input signal may be via satellite, cable system, over-the-air, or otherwise and may or may not contain control information, signature information, XDS, CC, or the like.

Receiver 10 has RF tuner/demodulator/link 16 that receives the digital signal via input 12 and which contains circuitry for such reception as well as for the selection of an input signal or channel from the incoming digital signal, digital demodulation of the signal, Forward Error Correction (FEC) decoding, and the outputting of the decoded data. Tuner/demodulator/link 16 is in communication with transport portion 18 that provides a first level of decoding of the error corrected data received from tuner/demodulator 16. Essentially, such first level decoding comprises routing the received data/information to the appropriate destination device within receiver 10 for further processing, e.g. audio data/information to the audio decoder, and video data/information to the video decoder and so forth. In the case of video, transport 18 forwards the video information to video decoder 22, typically an MPEG video decoder. MPEG video decoder 22 is a real-time video decompression processor that decodes and processes the MPEG compressed data. MPEG video decoder 22 is in communication with microprocessor or controller 20 and any internal or external memory (not shown) as may be necessary to provide the necessary decoding and processing functions. Also, microprocessor 20 is in communication with RAM and/or ROM. Microprocessor 20 is coupled to the other shown modules or devices within receiver 10 as well as those not shown via link 28 as necessary to receive and process the incoming audio and video signals.

As shown in Fig. 1, MPEG video decoder 22 includes an integral OSD generator 24, however, it should be understood that the OSD generator may be separate from the MPEG video decoder. OSD generator 24 provides bit-map capabilities to manipulate color and palette of each pixel, as well as whether the pixel is on or off, for overlaying same on any portion of the display, including blanking, while video decoding proceeds simultaneously. Palette registers may be selected and loaded with any color or with a value to indicate transparent pixels.

In accordance with an aspect of the present invention, microprocessor 20 supplies appropriate control, data, signature, and similar information (collectively control information) as is desired per appropriate software to OSD 24 for inclusion as OSD data/information into the video signal. Any data/information received by receiver 10, such as CGMS information, may be inserted into the video signal as an OSD signal during non-blanking intervals. Data or information not received by receiver 10 through non-inclusion of same in the incoming signal or unable to be processed by receiver 10, may be inserted into the video signal as internally generated (emulated) OSD data/information. Of course, any data/information delivered as an OSD signal will be displayed on the display device (external device). However, while such information may be displayed, it may not necessarily be viewable if such information is in an overscan area, or contained in various individual pixels throughout a display portion or the entire display area which would not be readily discerned by the eye.

MPEG video decoder 22 is in communication with video digital to analog (D/A) converter 26 that converts the digital video signal, with or without OSD data/information including OSD coded data/information in accordance with the present principles, into an analog video signal without synchronization signals. Synchronization signals are generated within receiver 10 and outputted as a separate signal from the video signal. Video D/A converter 26 contains three digital-to-analog converters to convert the Y, Cr, and Cb video data signals from MPEG video decoder 22 into Y, Pr, and Pb video signals. If necessary, the Y, Pr, and Pb signals may be matrixed as is known in the art to provide an RGB (video) output signal. In this case, the video signals would also include any OSD data/information. Video D/A converter 26 has output 14 that provides the analog video representation of the digital video information received by receiver 10 and any OSD data/information including any coded, emulated, or imbedded data/information.

Thus, the OSD of a video receiver is utilized to transmit data or information to an external device that separately processes the OSD data or information during real-time video processing which can then be used by the external device for device control or otherwise. This is accomplished, at least in part, by appropriate software for the video receiver.

With reference now to Fig. 2, there is shown external device or module 30 that can be incorporated into a VCR or other recording/playback device, television/monitor, or the like that receives and utilizes video signals and of course, is separate from receiver 10. External device 30 includes video input 32 that feeds into detector 38. In this case, detector 38 is adapted to receive the Y, Pr, and Pb or RGB video signals and provide output signals that correspond to the chroma and luminance values of each pixel, in essence processing the video signals including the OSD data/information included with those signals. As well, external device 30 includes sync input 34 which is provided by receiver 10 as a separate signal. Video synchronization signals are used for determining the location of pixels on the video signal. Counter and/or timing circuits 40 are utilized to identify any position on the display (or bit-mapped area constituting what would be a display) to which a characteristic or value has been assigned, such as palette, color, on/off, or the like. Thus, any individual pixel, line of pixels, group of pixels, pattern of pixels, or the like may be identified by its characteristics as given to it by OSD 24 of receiver 10. Microprocessor 44, typically in communication with RAM and ROM, may be in communication with detector 38 and counter/timer 40 and under direction of appropriate software to ascertain, understand, and process the code, data, or information contained in the OSD data/information and/or to add intelligence to the processing.

Detector 38, microprocessor 44, and counter/timer 40 are in communication with output gate 42 that provides gating of the detector output signal (e.g. the chroma and luminance value present at a location or group of locations) with the counter/timer output as appropriate to supply a signal to output 36, typically a logic or voltage level signal. The output signals which correspond to the OSD data/information can then be utilized for any purpose. One purpose may be to display a watermark or message that may be pre-stored, for example, in the ROM of a VCR or video display device that incorporates external device 30, or through controlling the characteristics of various pixels at some point or points during the video. Another purpose may be to use the signal as a means of control of yet another device or scheme that could, for example, limit or prohibit the copying, recording, or other function of the other device. As well, broadcasters at the signal source may insert data/information into the non blanked portions of the video signal that can be detected and utilized by the present invention.

## Claims

1. A method of communicating non-video data from a video receiver to an external device comprising the steps of:
a. receiving a digital video signal;
b. providing said non-video data to an OSD generator to produce OSD data;
c. producing an analog video signal derived from the digital video signal;
d. inserting the OSD data into the analog video signal; and
e. outputting the analog video signal including the OSD data to the extemal device.

2. The method of claim 1, wherein the OSD data is inserted into the analog video signal during non-blanking portions.

3. The method according to any of the preceding claims, wherein the non-video data is control data.

4. The method according to any of the preceding claims, wherein the non-video data is information usually included in a blanking interval of an analog video signal.

5. The method according to any of the preceding claims, wherein the non-video data is contained in the digital video signal.

6. The method according to any of the preceding claims, wherein the non-video data is determined by the video receiver.

7. The method according to any of the preceding claims, wherein the OSD data is displayable in an overscan region.

8. The method according to any of the preceding claims, wherein the video receiver provides a sync signal to the external device.

9. A method according to any preceding claim further comprising the steps of:
a. receiving, from a video receiver, an analog video signal including OSD data;
b. processing said received analog video signal to identify the OSD data;
c. processing the OSD data to obtain non-video data; and
d. controlling the device in response to the non-video data.

## Patentansprüche

1. Verfahren zum Übertragen von Nicht-Videodaten von einem Video-Empfänger zu einer externen Vorrichtung, umfassend die Schritte:
a. Empfangen eines digitalen Videosignals;
b. Liefern von Nicht-Videodaten an einen OSD-Generator zur Erzeugung von OSD-Daten;
c. Erzeugen eines analogen Videosignals, das von dem digitalen Videosignal abgeleitet wird;
d. Einfügen der OSD-Daten in das analoge Videosignal;
e. Ausgeben des analogen Videosignals einschließlich der OSD-Daten an die externe Vorrichtung.

2. Verfahren nach Anspruch 1, bei dem die OSD-Daten in das analoge Videosignal während nicht ausgetasteten Teilen eingefügt wird.

3. Verfahren nach einem der vorhergehenden Ansprüche, bei dem die Nicht-Videodaten Steuer-Daten sind.

4. Verfahren nach einem der vorhergehenden Ansprüche, bei dem die Nicht-Videodaten Informationen sind, die üblicherweise in einem Austast-Intervall eines analogen Videosignals enthalten sind.

5. Verfahren nach einem der vorhergehenden Ansprüche, bei dem die Nicht-Videodaten in dem digitalen Videosignal enthalten sind.

6. Verfahren nach einem der vorhergehenden Ansprüche, bei dem die Nicht-Videodaten durch den Video-Empfänger bestimmt werden.

7. Verfahren nach einem der vorhergehenden Ansprüche, bei dem die OSD-Daten in einem Über-Abtast-Bereich angezeigt werden können.

8. Verfahren nach einem der vorhergehenden Ansprüche, bei dem der Video-Empfänger ein Synchronsignal an die externe Vorrichtung liefert.

9. Verfahren nach einem der vorhergehenden Ansprüche, das ferner die Schritte umfasst:
a. Empfangen eines analogen Videosignals einschließlich OSD-Daten von einem Video-Empfänger;
b. Verarbeiten des empfangenen analogen Videosignals, um die OSD-Daten zu identifizieren;
c. Verarbeiten der OSC-Daten, um Nicht-Videodaten zu erhalten; und
d. Steuern der Vorrichtung in Abhängigkeit von den Nicht-Videodaten.

## Revendications

1. Procédé de communication de données non vidéo depuis un récepteur vidéo jusqu'à un dispositif externe comprenant les étapes de :
a. réception d'un signal vidéo numérique ;
b. fourniture desdites données non vidéo à un générateur OSD pour produire des données OSD ;
c. production d'un signal vidéo analogique dérivé du signal vidéo numérique ;
d. insertion des données OSD dans le signal vidéo analogique ; et
e. sortie du signal vidéo analogique comportant les données OSD vers le dispositif externe.

2. Procédé selon la revendication 1, dans lequel les données OSD sont insérées dans le signal vidéo analogique durant les parties de non-suppression.

3. Procédé selon l'une quelconque des revendications précédentes, dans lequel les données non vidéo sont des données de commande.

4. Procédé selon l'une quelconque des revendications précédentes, dans lequel les données non vidéo sont des informations habituellement incluses dans un intervalle de suppression d'un signal vidéo analogique.

5. Procédé selon l'une quelconque des revendications précédentes, dans lequel les données non vidéo sont contenues dans le signal vidéo numérique.

6. Procédé selon l'une quelconque des revendications précédentes, dans lequel les données non vidéo sont déterminées par le récepteur vidéo.

7. Procédé selon l'une quelconque des revendications précédentes, dans lequel les données OSD sont affichables dans une région de surbalayage.

8. Procédé selon l'une quelconque des revendications précédentes, dans lequel le récepteur vidéo fournit un signal de synchronisation au dispositif externe.

9. Procédé selon l'une quelconque des revendications précédentes, comprenant en outre les étapes de :
a. réception, depuis un récepteur vidéo, d'un signal vidéo analogique comportant des données OSD ;
b. traitement dudit signal vidéo analogique reçu pour identifier les données OSD ;
c. traitement des données OSD pour obtenir des données non vidéo ; et
d. commande du dispositif en réponse aux données non vidéo.
